# EUROPEAN PATENT SPECIFICATION

(11) **EP 0 838 153 B1**
(45) Date of publication and mention of the grant of the patent: **02.03.2005**
(21) Application number: 97308545.9
(22) Date of filing: 27.10.1997
(51) Int. Cl.: A01K 15/02, A23K 1/18, A23K 1/14

(54) **A dog chew**
Hundekauartikel
Produit à mâcher pour chiens

(30) Priority: 25.10.1996 US 738423; 17.01.1997 US 784834; 07.07.1997 US 888611; 03.09.1997 US 923070
(43) Date of publication of application: 29.04.1998
(73) Proprietor: T.F.H. PUBLICATIONS INC., Neptune, New Jersey 07753 (US)
(72) Inventor: Axelrod, Glen S., Mahwah, New Jersey 07430 (US)
(74) Representative: Hayes, Adrian Chetwynd

(56) References cited:
- EP-A- 0 552 897
- DE-A- 3 701 861
- DE-A- 19 501 142
- FR-A- 2 705 864
- GB-A- 2 179 589
- US-A- 3 899 607
- US-A- 5 419 283
- US-A- 5 476 069

## Description

The present invention relates to an injection molded dog chew, such as a completely digestible, nutritious dog chew, the texture or hardness of which is easily modified to suit a particular dog.

Most dogs enjoy chewing on things although preferences vary as to the hardness of the substances favoured. Many dogs are especially attracted to animal bones and animal-derived chew toys. Some dogs like to chew on very hard materials such as cow bones, wood or nylon, others prefer softer chews such as polyurethane or rubber chews while still others favour dried snacks. Young dogs have insufficiently developed teeth, while old dogs may have diseased gums or may have lost some of their teeth.

Many indigestible objects are given to dogs to chew and although the dogs may enjoy chewing thereon, the objects are often swallowed in whole or in part. Once swallowed, these objects or fragments thereof can have an adverse effect on the dog's digestion and can become impacted in, impaled in or otherwise obstruct the dog's intestinal tract with life-threatening consequences. By way of example, dog chews have been marketed which utilize an ethylene copolymer which can be fractured by the chewing action of a dog, and when ingested can block the dog's stomach passages.

While various vegetable derived products are available to address such concerns, the chewability of such products does not conform to the chew characteristics desired in dog chews. The material is either not hard enough to serve as a dog chew or is extremely hard and dense to the point that it is brittle and is therefore quickly and easily shattered by a large dog.

Other edible dog chews have been marketed which have a comparatively short shelf life and must therefore be replaced by retail outlets at frequent intervals. Yet other prior art dog chews are lacking in structural integrity whereby they are susceptible to breakage during handling and shipping.

It is desirable to provide a dog chew that has the chewing characteristics normally associated with chew toys, as well as nutritional characteristics not found in indigestible plastic dog chews and in traditional meat/chicken-based dog chews.

The Applicant has previously developed an edible dog chew that is wholly digestible, nutritious and has a texture or hardness which is individually adjustable by the application of heat to suit a wide variety of dog's preferences or needs. Such dog chews utilize a mixture containing primarily casein and are disclosed in US-A-5,200,212 and US-A-5,240,720. Such dog chews, while constituting a major improvement over other prior art edible dog chews, do not provide all the advantages of the dog chew of the present invention.

The present invention provides an injection molded dog chew comprising carrot, spinach, asparagus, broccoli, bean, pea, corn matter or potato starch, in combination with calcium carbonate. The carrot, spinach, asparagus, broccoli, bean, pea, corn matter or potato starch can be present in an amount of preferably at least 50wt%, more preferably at least 60wt%, even more preferably at least 80wt% non-casein vegetable matter.

In a preferred embodiment the injection molded dog chew comprises potato starch, calcium carbonate and an attractant.

In a preferred embodiment the injection molded dog chew comprises carrot, spinach, asparagus, broccoli, bean, pea or corn matter, calcium carbonate and casein.

The present invention further provides an injection molded dog chew comprising 60 to 85wt%, preferably 70wt%, potato starch, 10 to 15wt%, preferably about 15wt%, water, 5 to 10wt% calcium carbonate, 1 to 5wt% attractant and 1 to 5wt% natural vegetable additives.

The dog chew of the present invention could be produced by a first method comprising:
i) drying carrot, spinach, asparagus, broccoli, bean, pea or corn matter;
ii) reducing said carrot, spinach, asparagus, broccoli, bean, pea or corn matter to beads;
iii) injection moulding said beads to the shape of the dog chew; and
iv) allowing the molded shape to harden.

The dog chew of the present invention can additionally be produced by a second method comprising:
i) drying carrot, spinach, asparagus, broccoli, bean, pea or corn matter;
ii) reducing said carrot, spinach, asparagus, broccoli, bean, pea or corn matter to particles;
iii) melting said dried particles;
iv) injection molding said molten vegetable matter to the shape of the dog chew;
v) removing the dried dog chew from the mold; and
vi) allowing said molding to harden.

The edible dog chew of the present invention is completely digestible and nutritious, and is preferably devoid of deleterious additives. The chew may be composed completely of natural ingredients. The chew has a modifiable texture or hardness that is quickly and easily tailorable by the owner to suit the need or preference of his particular dog. The chews have a long shelf life as compared to prior edible dog chews.

The chews are biodegradable and extremely rugged so as to be able to withstand shocks resulting from shipping and handling. Upon removal from the chew's package, the chew can be caused to swell, for example up to 2 to 8, preferably up to 6 to 8, times its original volume, if desired, by subjecting it to microwave radiation. With this procedure, the chew's texture or hardness can be adjusted to any magnitude from its original high density, extremely hard state to a low density, expanded, easily chewed state depending on the amount of microwave exposure to which it is subjected. Accordingly the chew can thereby be quickly and easily adjusted to the texture preference of a wide variety of dogs from a strong, large, healthy dog to a small puppy with puppy teeth or an older dog with decayed molars.

Other features and advantages of the present invention will become apparent from the following detailed description taken in conjunction with the accompanying drawings which illustrate by way of example the principles of the invention.
Fig. 1 illustrates a preferred embodiment of an edible dog chew of the present invention in its unexpanded state.
Fig. 2 illustrates the dog chew of fig. 1 in its partially expanded state.
Fig. 3 illustrates the dog chew of fig. 1 in its fully expanded state.

The dog chew of the present invention comprises carrot, spinach, asparagus, broccoli, bean, pea, corn matter or potato starch in combination with calcium carbonate.

The potato starch may be contained in the chew in an amount of, for example, 60 to 85wt%. The carrot, spinach, asparagus, broccoli, bean, pea or corn matter may be contained in the chew in an amount of, for example, up to 80wt%.

The carrot, spinach, asparagus, broccoli, bean, pea, corn matter or potato starch may have a size of no larger than 6.35mm to 12.7mm (0.25 to 0.50 inches) in its largest dimension.

The dog chew of the present invention may comprise other ingredients such as an attractant (for the dog), for example a vegetable attractant, casein, gelatin, calcium carbonate, lecithin or nutrients.

The casein may be present, for example, in an amount of up to 31 or 32wt%. Alternatively the casein may be present in, for example, an amount of up to 30 to 50wt%. The gelatine may be present, for example, in an amount of up to about 4wt%. The calcium carbonate may be present, for example, in an amount of up to 10wt%. The lecithin may be present, for example, in an amount of up to 10wt%. Water may be present, for example, in an amount up to 13 to 14wt%.

The dog chew may, for example, be in the form of a bone.

In the methods of the present invention a humectant may be added to help retain moisture in the finished dog chew and thereby render the chew resilient to resist shattering. A suitable humectant is, for example, salt or glycerin. The moisture content of the beads or particles is, if desired or if necessary, adjusted to 10 to 20wt% before the molding step. The water content may, for example, decrease to 10wt% after injection molding.

The injection molding may take place, for example, at 6.9 to 17.2 MPa (1,000 to 2,500 psi) and 121 to 204 °C(250 to 400 F). The molding is preferably allowed to harden to a moisture content of 4wt%.

In the second method of producing the dog chew according to the present invention the carrot, spinach, asparagus, broccoli, bean, pea, corn matter or potato starch, may be first comminuted into small particles. These particles are brought to a desired moisture content, casein and gelatin may be added, and the mixture is injected in a liquefied state at a raised pressure into an injection mold. The molded form is then allowed to cool in the injection mold until it hardens.

In the course of subjecting the comminuted matter to melting temperatures, the material becomes sterilized. Such sterilization serves to interrupt any decaying process that may be in progress, and therefore alleviates the potential for the dog chew to emit a foul odour. Furthermore, sterilization is achieved without baking the molded material so as to yield a very chewable product with a consistency and texture preferred by most dogs. By molding the mixture under a raised pressure, a substantially more cohesive product is formed than is possible using a baking process.

A preferred dog chew of the present invention has as a basic ingredient a potato starch product sold under the trade mark PARAGON IM 1010 by AVEBE of Veendam, The Netherlands. The PARAGON product is sold in the form of thermoplastic granules which are molded into a desired shape. The weight contents of such pellets are about 70% potato starch, about 15% water (about 10% after the pellets are molded), 5 to 10% calcium carbonate and 1 to 5% natural vegetable additives.

To such a mixture is added an attractant such as chicken powder, liver powder, ham, turkey, beef and/or fish in an amount of 1 to 5% by weight. Natural vegetable additives such as spinach or carrots may also be added. The resultant mixture is molded under heat and pressure into a desired form, such as a dog bone. Molding can be accomplished in an injection molding machine at temperatures between 121 to 204 °C (250 to 400 F) and pressure of 6.9 to 17.2 MPa (1,000 to 2,500 psi) depending on the injection molding machine utilized, the material's location within the molding machine, the type of additives, the particular mold and the size of the bone being molded.

Another preferred dog chew of the present invention may be prepared from carrot, spinach, asparagus, broccoli, bean, pea or corn matter. Carrot is used as an example here. Dried vegetable matter is comminuted into small particles not exceeding 6.35 to 12.7mm (0.25 to 0.50 inches) across their largest dimension. Up to 31% by weight of casein, up to 30% by weight of water and up to 4% by weight of gelatin may then be added to the carrot particles to facilitate molding and to adjust the chewability of the ultimate product. Various attractants such as chicken or liver and/or certain nutrients such as vitamins may additionally be added to the particle mixture. The vegetable matter includes up to 4wt% ash.

The particle mixture is then injected into a conventional injection molding machine having a barrel temperature of 121 to 204°C (250 to 400 F) and a molding pressure of 6.9 to 17.2 MPa (1,000 to 2,500 psi). The heat serves to sterilize the mixture while the commensurate liquefaction of the particle mixture ensures that a relatively homogenous mixture of carrot matter, casein, gelatin and any additives results. Homogeneity is most desirable as clumps of high concentrations of certain vitamins, for example, could be deleterious to the dog's health.

After the particle mixture in the mold has been molded, it is cooled sufficiently to cause the molded form to re-solidify into a desired shape, such as a bone, to thereby allow it to be ejected or extracted from the mold. Finally, the product is allowed to dry in a drying room over the course of about a week, while its moisture content is adjusted to 13 to 14wt%. It is not necessary to package the dog chew made in accordance with the present invention in moisture-proof packaging.

It has been found that dogs find the dog chew resulting from this method especially attractive, presumably by virtue of its chewability and consistency. As the dog chews on the product, small slivers thereof become dislodged, at which point the dog gains the benefit of any of the nutritional components contained therein. The consistency of the resulting dog chew is such that it takes most dogs about 30 minutes to a day to consume depending upon the particular dog, thereby providing a cost saving to the dog owner as compared to typical soft or small dog treats.

In another preferred embodiment of the present invention, dried vegetable matter such as potato, rice or wheat is chopped or ground into small granules or powder such that the largest particles do not exceed 6.35mm to 12.7mm (0.25 to 0.50 inches) across their largest dimension. The moisture content of these particles is then further adjusted if necessary to less than 10 to 20wt%. Up to 10wt% calcium carbonate powder and up to 5wt% lecithin may then optionally be added to facilitate extruding and/or molding and to adjust the chewability of the ultimate product. Small quantities, for example 1 to 3wt%, of salt or glycerin or other natural humectant may also be added to help retain moisture in the finished product and thereby render the finished product sufficiently resilient to resist shattering when dropped or otherwise impacted. Casein in an approximate amount of 15wt% may also be added. Alternatively casein in an amount of about 30 to 50wt% may also be added. Various dog attractants such as chicken powder, liver powder, ham, turkey, beef and/or fish in an amount of 1 to 5wt% are additionally added, if desired. Certain nutrients such as, for example, vitamins may be added to the mixture. Gelatin powder in an amount of up to 5 wt% may be added to facilitate molding and cohesion of the finished product.

The mixture is then "beaded" in an extruder, which creates beads that may be fed into an injection molder. The previously mentioned attractants may be added either before or after the "beading" process. The glycerin, casein, attractants, vitamins and/or gelatin may be added either during the extruding process or injection process. The beaded product has a diameter of 3 to 10 mm. The beads may be placed in a microwave or oven and will expand in a popcorn-like fashion. Such beads can be used directly as a food product.

The mixture of beads is then fed into an injection molding machine having a barrel temperature of 121 to 204 °C(250 to 400 F) and a molding pressure of 6.9 to 17.2 MPa (1,000 to 2,500 psi) which causes most of the particles to melt. The heat serves to sterilize the mixture, while the commensurate liquidification ensures a relatively homogenous mixture of carrot, asparagus, spinach, broccoli, bean, pea, corn matter or potato starch, calcium carbonate, lecithin, attractants and any other additives. The product may be molded into any of a variety of shapes, including for example the general shape of a bone.

After the particle mixture in the mold has been molded into a desired shape, it is cooled sufficiently to cause the molded form to solidify, thereby to allow it to be ejected or extracted from the mold.

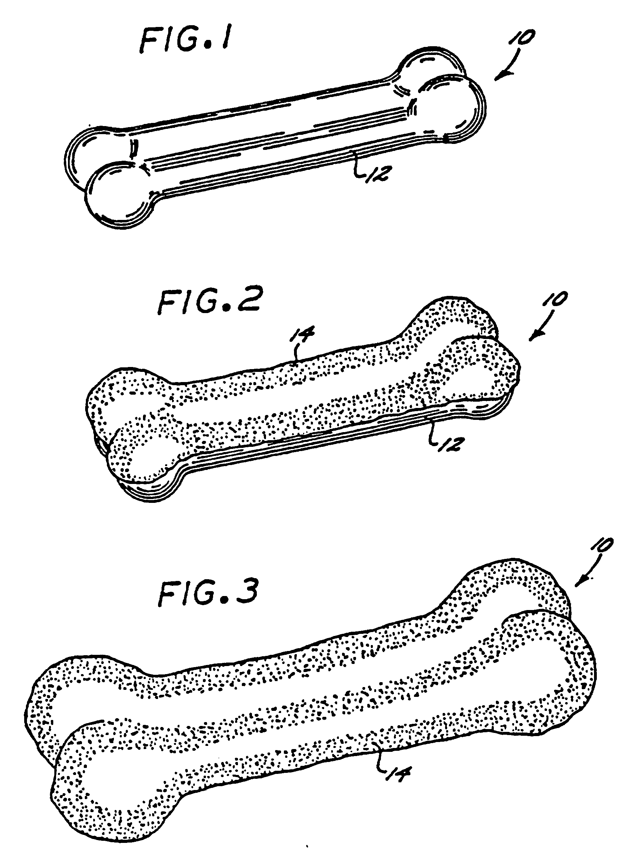

Upon removal from its package, if any, the person feeding the dog can modify the texture or hardness of the molded chew by heating, preferably in a microwave oven. The expansion of the moisture within the chew causes the chew to expand. Subjecting the chew to microwave radiation facilitates the heating of areas deep within the chew at the same time that the exterior heats up and expands. Fig. 1 illustrates the chew 10 prior to heating, in which state it has a substantially smooth exterior surface 12 and is of an extremely hard texture preferred by some dogs. A short exposure to microwave radiation initiates the expansion process. Fig. 2 illustrates the chew 10 in a partially expanded state evidenced by partially bubbled surface 14. In this state the chew 10 is of an intermediate hardness preferred by other dogs. Fig. 3 illustrates the chew 10 in a fully expanded state as may result from a 25 seconds to 1 minute exposure in a standard household microwave oven, depending on the size of the bone and the power setting of the oven. The entire chew 10 has a bubbled surface 14 and is easily chewable by most dogs. The chew in this state is ideal for small dogs with puppy teeth or old dogs who suffer from gum disease or may have lost teeth. Sufficient exposure to microwave radiation will cause the chew to expand up to 2 to 8, for example 6 to 8, times its original volume with a commensurate reduction in hardness and density.

In use the chew is given to the dog in its initial hardness state. If the dog is unwilling or is unable to chew on it, the chew is microwaved for short time increments and re-offered to the dog until the chew reaches a state of expansion and degree of hardness preferred by the dog. Large, strong and healthy dogs would probably prefer the chew in its unmodified and hardest state, while very small, young or very old dogs would prefer the chew in its most expanded state. Dog chews based on potato starch typically undergo a greater expansion than those based on carrot, spinach, asparagus, broccoli, bean, pea or corn matter.

The dog chew of the present invention can have various compositions falling within the above definitions. Examples of such compositions are as follows:
Potato Starch Product:

| | |
|---|---|
| Potato Starch Source | 44.4 kg (98 pounds) |
| Misc Ingredients | 9.5 kg (21 pounds) |

The misc ingredients can be fishmeal, lamb, rice, chicken, liver, cheese, rawhide, venison, spinach, peanut, carrot or any combination.
Carrot Product:

| | |
|---|---|
| Casein | 18.1 kg (40 pounds) |
| Carrot flakes | 22.7 kg (50 pounds) |
| Gelatin | 2.4 kg (5.25 pounds) |
| Water | 23.9 1 (21 quarts) |

Filamentateous Vegetable Product

| | |
|---|---|
| Casein | 18.1 kg (40 pounds) |
| Vegetable | 22.7 kg (50 pounds) |
| Gelatin | 2.4 kg (5.25 pounds) |
| Water | 23.9 l (21 quarts) |

It should be particularly noted that an edible dog chew made in accordance with the present invention does not dry out and fall apart after being packaged and accordingly can have a shelf life of several years without being packaged in a waterproof container. Additionally the dog chew is extremely resistant to breakage during shipping and handling.

Chewing the hard molded dog chew made in accordance with the present invention serves to massage a dog's teeth and gums thereby inhibiting the formation of plaque. Additionally, because a dog satisfies its craving for food by chewing such a dog chew, obesity in the dog is also inhibited. The chew has a low protein content and high carbohydrate content. Most chews on the market are high in protein and dogs should have limited quantities of high protein chews or snacks.

## Claims

1. An injection moulded dog chew comprising carrot, spinach, asparagus, broccoli, bean, pea, corn matter or potato starch, in combination with calcium carbonate.

2. The dog chew of claim 1, further comprising a humectant.

3. The dog chew of claim 2, wherein the humectant is salt or glycerin.

4. The dog chew of any one of the preceding claims, further comprising an attractant.

5. The dog chew of any one of the preceding claims wherein said broccoli, bean, pea or corn matter is present in an amount of up to 80 wt%.

6. The dog chew of any one of claims 1 to 4 comprising potato starch and calcium carbonate, wherein the potato starch is present in the range from 60 wt% to 85 wt%.

7. The dog chew of any one of the preceding claims wherein the carrot, spinach, asparagus, broccoli, bean, pea, corn matter or potato starch has a size of no larger than 6.35 mm to 12.7 mm (0.25 to 0.5 inches) in its largest dimension.

8. The dog chew of any one of the preceding claims, wherein the calcium carbonate is present in the range of up to 10 wt%.

9. The dog chew of any one of the preceding claims, further comprising water.

10. The dog chew of claim 9, wherein water is present in an amount of up to 14 wt%.

11. The dog chew of any one of the preceding claims, wherein the chew is in the shape of a bone.

12. An injection moulded dog chew comprising 60 to 85 wt% potato starch, 10 to 15 wt% water, 5 to 10 wt% calcium carbonate, 1 to 5 wt% attractant and 1 to 5 wt% natural vegetable additives.

## Patentansprüche

1. Ein Spritzguss-Hundekauartikel, umfassend Material von Karotte, Spinat, Spargel, Brokkoli, Bohne, Erbse, Getreide oder Kartoffelstärke, in Kombination mit Calciumcarbonat.

2. Der Hundekauartikel nach Anspruch 1, weiterhin umfassend ein Feuchthaltemittel.

3. Der Hundekauartikel nach Anspruch 2, wobei das Feuchthaltemittel Salz oder Glycerin ist.

4. Der Hundekauartikel nach einem der vorhergehenden Ansprüche, weiterhin umfassend ein Lockmittel.

5. Der Hundekauartikel nach einem der vorhergehenden Ansprüche, wobei das Material von Brokkoli, Bohne, Erbse oder Getreide in einer Menge von bis zu 80 Gew.-% vorhanden ist.

6. Der Hundekauartikel nach einem der Ansprüche 1 bis 4, umfassend Kartoffelstärke und Calciumcarbonat, wobei die Kartoffelstärke in dem Bereich von 60 Gew.-% bis 85 Gew.-% vorhanden ist.

7. Hundekauartikel nach einem der vorhergehenden Ansprüche, wobei das Material von Karotte, Spinat, Spargel, Brokkoli, Bohne, Erbse, Getreide oder die Kartoffelstärke eine Größe von nicht größer als 6,35 mm bis 12,7 mm (0.25 bis 0,5 Zoll) in seinem/ihrem größten Ausmaß aufweist.

8. Hundekauartikel nach einem der vorhergehenden Ansprüche, wobei das Calciumcarbonat in dem Bereich von bis zu 10 Gew.-% vorhanden ist.

9. Hundekauartikel nach einem der vorhergehenden Ansprüche, weiterhin umfassend Wasser.

10. Hundekauartikel nach Anspruch 9, wobei das Wasser in einer Menge von bis zu 14 Gew.-% vorhanden ist.

11. Hundekauartikel nach einem der vorhergehenden Ansprüche, wobei der Kauartikel in der Form eines Knochens vorliegt.

12. Ein Spritzguss-Hundekauartikel, umfassend 60 bis 85 Gew.-% Kartoffelstärke, 10 bis 15 Gew.-% Wasser, 5 bis 10 Gew.-% Calciumcarbonat, 1 bis 5 Gew.-% Lockmittel und 1 bis 5 Gew.-% natürliche pflanzliche Zusätze.

## Revendications

1. Produit à mâcher pour chiens moulé par injection, comprenant une matière issue de carotte, d'épinard, d'asperge, de brocoli, de haricot, de pois ou de maïs ou de l'amidon de pomme de terre, en association avec du carbonate de calcium.

2. Produit à mâcher pour chiens suivant la revendication 1, comprenant en outre un agent hydratant.

3. Produit à mâcher pour chiens suivant la revendication 2, dans lequel l'agent hydratant est le sel ou le glycérol.

4. Produit à mâcher pour chiens suivant l'une quelconque des revendications précédentes, comprenant en outre un agent attractif.

5. Produit à mâcher pour chiens suivant l'une quelconque des revendications précédentes, dans lequel ladite matière issue de brocoli, de haricot, de pois ou de maïs est présente en une quantité allant jusqu'à 80 % en poids.

6. Produit à mâcher pour chiens suivant l'une quelconque des revendications 1 à 4, comprenant de l'amidon de pomme de terre et du carbonate de calcium, dans lequel l'amidon de pomme de terre est présent en une quantité comprise dans l'intervalle de 60 % en poids à 85 % en poids.

7. Produit à mâcher pour chiens suivant l'une quelconque des revendications précédentes, dans lequel la matière issue de carotte, d'épinard, d'asperge, de brocoli, de haricot, de pois, de maïs ou l'amidon de pomme de terre a des dimensions d'une valeur non supérieure à 6,35 mm à une valeur de 12,7 mm (0,25 à 0,5 inch) dans sa plus grande dimension.

8. Produit à mâcher pour chiens suivant l'une quelconque des revendications précédentes, dans lequel le carbonate de calcium est présent en une quantité comprise dans un intervalle allant jusqu'à 10 % en poids.

9. Produit à mâcher pour chiens suivant l'une quelconque des revendications précédentes, comprenant en outre de l'eau.

10. Produit à mâcher pour chiens suivant la revendication 9, dans lequel l'eau est présente en une quantité allant jusqu'à 14 % en poids.

11. Produit à mâcher pour chiens suivant l'une quelconque des revendications précédentes, ledit produit à mâcher étant sous forme d'un os.

12. Produit à mâcher pour chiens, moulé par injection, comprenant 60 à 85 % en poids d'amidon de pomme de terre, 10 à 15 % en poids d'eau, 5 à 10 % en poids de carbonate de calcium, 1 à 5 % en poids d'agent attractif et 1 à 5 % en poids d'additifs végétaux naturels.
